# EUROPÄISCHE PATENTSCHRIFT

(11) **EP 1 425 193 B1**
(45) Veröffentlichungstag und Bekanntmachung des Hinweises auf die Patenterteilung: **26.01.2005**
(21) Anmeldenummer: 02776663.3
(22) Anmeldetag: 10.09.2002
(51) Int. Cl.: B60H 1/34, B60H 1/00, F24F 13/075

(54) **LUFTLEITVORRICHTUNG**
AIR CONDUCTING DEVICE
DISPOSITIF D'ACHEMINEMENT D'AIR

(30) Priorität: 11.09.2001 DE 10144755
(43) Veröffentlichungstag der Anmeldung: 09.06.2004
(73) Patentinhaber: Utescheny AG, 75059 Zaisenhausen (DE)
(72) Erfinder: PESCH, Michael, 74235 Erlenbach (DE); HAMKE, Peter, 32584 Löhne (DE); BAUER, Thomas, 75031 Eppingen-Mühlbach (DE)
(74) Vertreter: Clemens, Gerhard, Dr.-Ing.
(86) Internationale Anmeldenummer: PCT/DE2002/003363
(87) Internationale Veröffentlichungsnummer: WO 2003/022610

(56) Entgegenhaltungen:
- DE-C- 19 648 736
- PATENT ABSTRACTS OF JAPAN vol. 010, no. 115 (M-474), 30. April 1986 (1986-04-30) & JP 60 244618 A (ANSEI KOGYO:KK), 4. Dezember 1985 (1985-12-04)

## Beschreibung

### TECHNISCHES GEBIET

Die vorliegende Erfindung betrifft eine Luftleitvorrichtung zum richtungsmäßig definierten Einleiten von auf der Rückseite der Vorrichtung zugeführter Luft in einen Raum, insbesondere Innenraum eines Fahrzeugs, mit einem Gehäuse, zumindest einem Kanal, in dem die Luft dem Gehäuse zugeführt wird, einer vorderseitig Ausnehmungen aufweisenden Luftleiteinrichtung, mittels derer die Richtung der in den Raum ausströmenden Luft festlegbar ist, Mitteln zum Einstellen der Richtung der Luftleiteinrichtung und gegebenenfalls Mitteln zum Einstellen der Menge der in den Raum strömenden Luft.

Derartige Luftleitvorrichtungen werden in großer Stückzahl im Innenraum von Kraftfahrzeugen zur Steuerung der Luftströmung (Richtung und Masse) eingesetzt.

### STAND DER TECHNIK

Es sind Luftleitvorrichtungen bekannt, die zur Steuerung der Luftströmungsrichtung sogenannte Lamellen- beziehungsweise Walzenausströmer besitzen. Hierbei werden sichtbare und schwenkbare Horizontal- und Vertikal-Lamellen über eine Mechanik unter manueller Betätigung nach "oben/unten" beziehungsweise nach "links/rechts" geschwenkt und somit die Luftströmung gesteuert. Die Menge der austretenden Luft wird hierbei manuell über ein Handrad eingestellt, das auf die Stellung einer im Zuführungskanal der Luft angeordneten schwenkbaren Klappe einwirkt. Durch diese "offene Bauweise" wird die optik beziehungsweise das Design des Armaturenbretts eines Kraftfahrzeugs gestört. Die Luftleitvorrichtung wirkt wie ein Fremdkörper. Darüber hinaus neigen die Horizontal- und Vertikal-Lamellen zur Verschmutzung durch Staubansammlung in den Eckbereichen, die zu Reinigungszwecken nur schwer zugänglich sind.

Eine Luftleitvorrichtung der eingangs genannten Art ist aus der EP 1 059 178 A2 bekannt. Dabei wird ein elastischer Luftleitkörper eingesetzt, der durchgehende Ausnehmungen aufweist, durch die die Luft hindurchströmt. Durch eine Relativbewegung der Vorderseite beziehungsweise Rückseite des Luftleitkörpers kann die Richtung der diffus ausströmenden Luft eingestellt werden.

### DARSTELLUNG DER ERFINDUNG

Ausgehend von dem genannten Stand der Technik liegt der vorliegenden Erfindung die Aufgabe beziehungsweise das technische Problem zugrunde, eine Luftleitvorrichtung anzugeben, die eine einfache und dauerhaft zuverlässige Einstellung der Luftstömungsrichtung gewährleistet, eine wirtschaftliche Herstellung und Montage und die Umsetzung höchster designerischer Ansprüche ermöglicht und bei der ein unterschiedliches Ausströmprofil in einfacher Art und Weise eingestellt werden kann.

Die erfindungsgemäße Luftleitvorrichtung ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Luftleitvorrichtung zeichnet sich demgemäß dadurch aus, dass im Gehäuse oder im Kanal ein in und entgegen der Richtung der zugeführten Luft verschiebbares Strahlrohr angeordnet ist, dessen Luftaustrittsöffnung eine geringere Größe aufweist als die Querschnittsfläche der Luftleiteinrichtung, wobei in eingefahrener Stellung des Strahlrohres die Luft aus der Luftleiteinrichtung mit einem diffusen Ausströmprofil austritt und in ausgefahrener Stellung des Strahlrohres dessen Luftaustrittsöffnung so nah an die Innenseite der Luftleiteinrichtung herangeführt ist, dass die Luft mit einem gebündelten Ausströmprofil austritt.

Gemäß einer bevorzugten Ausführungsform entspricht die Querschnittsform des Strahlrohres im Wesentlichen der Querschnittsform des Kanals.

Mit der erfindungsgemäßen Leitvorrichtung ist es problemlos möglich, ein diffuses Ausströmprofil zu erzeugen, in dem das Strahlrohr sich im eingeschobenen Zustand im Luftkanal befindet. Ein starkes, gebündeltes Ausströmprofil wird dadurch eingestellt, dass das Strahlrohr innenseitig bis nah vor die Verschiebeplatte ausgefahren wird.

Eine besonders vorteilhafte Ausgestaltung zeichnet sich dadurch aus, dass eine Steuereinrichtung vorhanden ist, die auf einen Verschiebemechanismus zum Verschieben des Strahlrohres in Längsrichtung einwirkt.

Die Steuereinrichtung kann manuell betätigbar sein. Es ist jedoch auch möglich, eine Steuereinrichtung einzusetzen, die in Abhängigkeit der zugeführten Luftmenge die Verschiebung des Strahlrohres steuert, derart, dass je mehr Luft zugeführt wird, desto weiter wird das Strahlrohr in Richtung der Luftleiteinrichtung ausgefahren. Eine konstruktiv besonders einfach umzusetzende vorteilhafte Ausführungsform zeichnet sich dadurch aus, dass die Steuereinrichtung in Abhängigkeit der Winkelstellung einer im Kanal drehbar angeordneten Klappe die Verschiebung des Strahlrohres steuert.

In einer Ausführungsvariante ist die Steuereinrichtung so ausgebildet, dass sie lediglich bei maximal zugeführter Luftmenge beziehungsweise bei voll geöffneter Klappe ein vollständiges Ausfahren des Strahlrohres veranlasst.

Eine besonders bevorzugte Ausgestaltung, die ein diffuses Ausströmen mit einstellbarer Ausströmrichtung und andererseits ein starkes, gebündeltes Ausströmprofil ermöglicht, zeichnet sich dadurch aus, dass die Luftleiteinrichtung einen Luftleitkörper aus elastisch verformbarem Material mit durchgehenden Ausnehmungen aufweist, Mittel zum Verschieben der Rückseite des Luftleitkörpers gegenüber der fixierten Vorderseite des Luftleitkörpers vorhanden sind oder umgekehrt und die Mittel zum Verschieben von Mitteln zum Einstellen der Richtung beaufschlagt werden, so dass sich eine gewünschte Stellung der durchgehenden Ausnehmungen und damit die gewünschte Einströmrichtung einstellbar ist.

In einer vorteilhaften Weiterbildung weist der Luftleitkörper innenseitig eine Verschiebeplatte mit entsprechenden Ausnehmungen auf, wobei die Mittel zum Verschieben auf die Verschiebeplatte einwirken. Dadurch kommt es zu einer Relativverschiebung zwischen Rückseite und Vorderseite des elastischen Luftleitkörpers, sodass durch diese definierte Verschiebung die Richtung der ausströmenden Luft eingestellt werden kann.

Die durchgehenden Ausnehmungen können zumindest bereichsweise parallel zueinander angeordnet sein oder gemäß einem bevorzugten Ausführungsbeispiel bereichsweise in einem definierten Winkel angeordnet sein.

Die durchgehenden Ausnehmungen können einen runden, polygonalen, ovalen oder sonstigen Querschnitt aufweisen.

Eine Ausführungsvariante, die hohen designerischen Ansprüchen genügt, zeichnet sich dadurch aus, dass die Vorderseite der Luftleiteinrichtung beziehungsweise des Luftkörpers dreidimensional ausgebildet ist, insbesondere eine sphärisch konvexe Wölbung aufweist.

Besonders vorteilhaft ist es, vorderseitig auf der Luftleiteinrichtung beziehungsweise dem Luftleitkörper eine Lochblende anzuordnen, die bevorzugt aus hochwertigem Designmaterial besteht.

Weitere Ausführungsformen und Vorteile der Erfindung ergeben sich durch die in den Ansprüchen ferner aufgeführten Merkmale sowie durch das nachstehend angegebene Ausführungsbeispiel.

### KURZE BESCHREIBUNG DER ZEICHNUNG

Die Erfindung sowie eine vorteilhafte Ausführungsform und Weiterbildung derselben wird im Folgenden anhand des in der Zeichnung dargestellten Beispiels näher beschrieben und erläutert. Es zeigen:
- Fig. 1: schematischer Längsschnitt durch eine Luftleitvorrichtung mit einem längsverschieblichen Strahlrohr in eingefahrener Position und
- Fig. 2: schematischer Längsschnitt durch eine Luftleitvorrichtung mit einem längsverschieblichen Strahlrohr in ausgefahrener Position.

### WEGE ZUM AUSFÜHREN DER ERFINDUNG

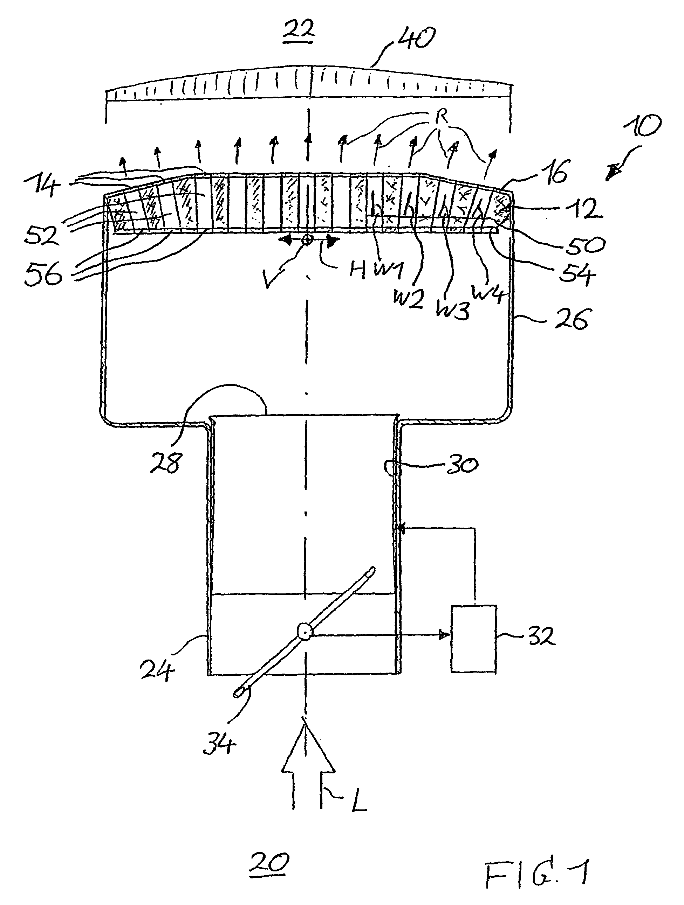

Eine in den Figuren schematisch im Längsschnitt dargestellte Luftleitvorrichtung 10 besitzt ein im Wesentlichen im Querschnitt rechteckförmiges Gehäuse 26, an das rückseitig ein Kanal 24 angeschlossen ist. Über den Kanal 24 wird dem Gehäuse 26 rückseitig, das heißt in Figur 1 von unten, Luft L zugeführt. Im Kanal 24 ist weiterhin eine drehbare Klappe 34 angeordnet, mittels derer die Menge der einströmenden Luft L gesteuert werden kann. Auf seiner Vorderseite ist das Gehäuse 26 mit einer Lochblende 16 mit rasterförmig angeordneten Ausnehmungen 14 versehen. Rückseitig ist an die Lochblende 16 eine Luftleiteinrichtung 12 angeschlossen, die einen Luftleitkörper 50 aufweist, der aus elastischem Material, insbesondere Schaumstoff, besteht und als relativ dicke Platte ausgebildet ist. Der Luftleitkörper 50 besitzt durchgehende Ausnehmungen 52, die mit den Ausnehmungen 14 der Lochblende 16 korrespondieren. Rückseitig ist an den Luftleitkörper 50 eine Verschiebeplatte 54 angeschlossen, die ebenfalls Ausnehmungen 56 aufweist, die mit den durchgehenden Ausnehmungen 52 des Luftleitkörpers 50 korrespondieren.

Die Richtung der durchgehenden Ausnehmungen 52 bestimmt die Richtung R der aus der Luftleitvorrichtung 10 austretenden Luft L. Durch Verschieben der Verschiebeplatte 54 in die senkrecht aufeinanderstehenden Richtungen V und H kann in dem vorgegebenen konstruktiven Rahmen die Richtung R der austretenden Luft eingestellt werden. Eine derartige Vorrichtung ist in der europäischen Patentanmeldung 1 059 178 beschrieben. Die zum Verschieben der Verschiebeplatte 54 benötigten Verschiebemechanismen und Stellglieder sind in den Figuren aus Übersichtlichkeitsgründen nicht näher dargestellt.

Die Luftleiteinrichtung 12 ist so ausgebildet, dass die Luft aus der Luftleitvorrichtung 10 mit einem diffusen Ausströmprofil 40 ausströmt.

Die Rückseite, von der die Luftleitvorrichtung 10 mit Luft L beaufschlagt wird, ist in den Figuren mit dem Bezugszeichen 20 angegeben. Der Raum, in dem die Luft ausströmt, ist in den Figuren mit dem Bezugszeichen 22 angegeben.

Weiterhin ist innerhalb des Kanals 24 ein in Kanallängsrichtung verschiebliches Strahlrohr 30 angeordnet, das im Wesentlichen dieselbe Querschnittsfläche wie der Kanal 24 aufweist. In Figur 1 befindet sich das Strahlrohr 30 in eingefahrener Position, das heißt die Luftleitvorrichtung 10 gibt die Luft in den Raum 22 mit dem diffusen Ausströmprofil 40 ab, da keine Beeinflussung der Strömung durch das Strahlrohr 30 erfolgt.

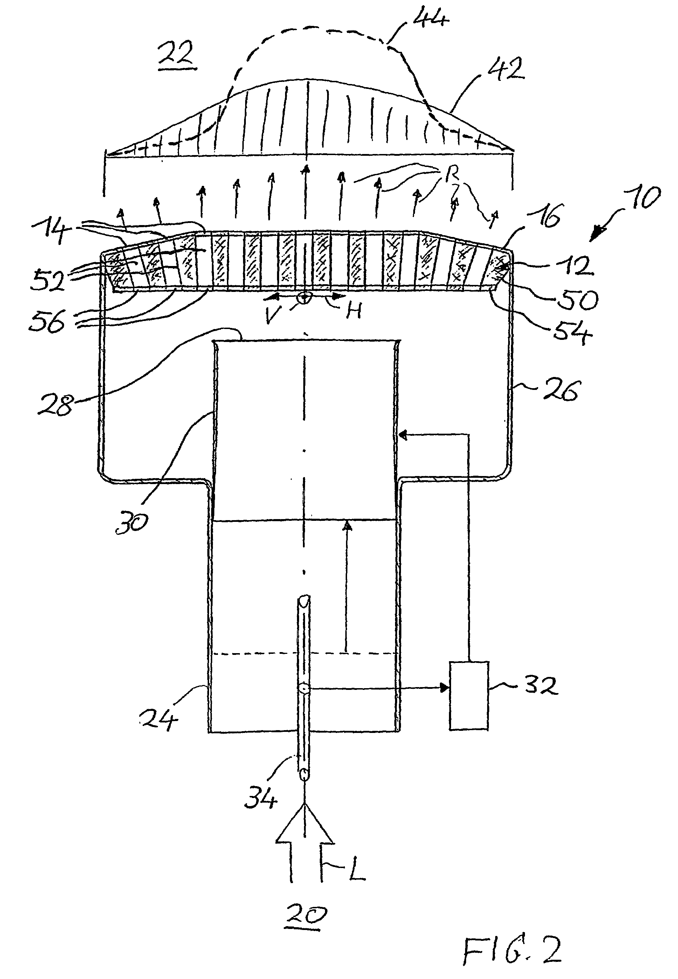

In Figur 2 ist das Strahlrohr 30 in ausgefahrener Position dargestellt, das heißt die Luftaustrittsöffnung 28 des Strahlrohres 30 ist zur Innenseite der Luftleiteinrichtung 12 hin verschoben angeordnet. In dieser Position des Strahlrohres 30 stellt sich ein stark gebündeltes Ausströmprofil 42 ein, wie es in Figur 2 oberseitig als Diagramm dargestellt ist. Je nach konstruktiver Ausgestaltung kann ein alternatives Ausströmprofil 44 erzeugt werden, das eine stärkere Bündelung aufweist.

In den Figuren ist weiterhin eine Steuereinrichtung 32 schematisch dargestellt, die in Abhängigkeit der Winkelstellung der Klappe 34 die Verschiebung des Strahlrohres 30 veranlasst. Im vorliegenden Ausführungsbeispiel ist es so, dass das Strahlrohr 30 solange im eingefahrenen Zustand bleibt, solange die Klappe 34 nicht vollständig geöffnet ist. Sobald die Klappe 34 sich in voll geöffneter Position gemäß Figur 2 befindet, veranlasst die Steuereinrichtung 32 das Ausfahren des Strahlrohres 30 in die in Figur 2 dargestellte Ausfahrposition. Die konstruktive Ausgestaltung der Mittel zum Verschieben des Strahlrohres sind in den Figuren nicht dargestellt. Es stellt jedoch für den Fachmann keinerlei Problem dar, diese konstruktiv umzusetzen.

Die durchgehenden Ausnehmungen 52 des Luftleitkörpers 50 weisen bereichsweise einen unterschiedlichen Winkel zur Richtung H auf. Im mittleren Bereich sind die Ausnehmungen 52 parallel zueinander angeordnet und verlaufen parallel zur Richtung zur einströmenden Luft L. Zum Randbereich hin sind jeweils die letzten drei Ausnehmungen 52 mit zunehmendem Winkel W1, W2, W3, W4 nach außen geneigt vorhanden. Die Außenoberfläche des Luftleitkörpers 50 beziehungsweise der Lochblende 16 weist eine leicht konvexe Wölbung nach außen auf.

## Patentansprüche

1. Luftleitvorrichtung (10) zum richtungsmäßig definierten Einleiten (R) von auf der Rückseite (20) der Vorrichtung zugeführter Luft (L) in einen Raum (22), insbesondere Innenraum eines Fahrzeugs, mit
- einem Gehäuse (26),
- zumindest einem Kanal (24), in dem die Luft (L) dem Gehäuse (26) zugeführt wird,
- einer vorderseitig Ausnehmungen (14) aufweisenden Luftleiteinrichtung (12), mittels derer die Richtung (R) der in den Raum (22) ausströmenden Luft festlegbar ist,
- Mitteln zum Einstellen der Richtung (R) der Luftleiteinrichtung (12) und gegebenenfalls
- Mitteln zum Einstellen der Menge der in den Raum (22) strömenden Luft,
**dadurch gekennzeichnet, dass**
- im Gehäuse (26) oder im Kanal (24) ein in und entgegen der Richtung der zugeführten Luft (L) verschiebbares Strahlrohr (30) angeordnet ist, dessen Luftaustrittsöffnung (28) eine geringere Größe aufweist als die Querschnittsfläche der Luftleiteinrichtung (12),
- wobei in eingefahrener Stellung des Strahlrohres (30) die Luft (L) aus der Luftleiteinrichtung (12) mit einem diffusen Ausströmprofil (40) austritt und in ausgefahrener Stellung des Strahlrohres (30) dessen Luftaustrittsöffnung (32) so nah an die Innenseite der Luftleiteinrichtung (12) herangeführt ist, dass die Luft mit einem gebündelten Ausströmprofil (42) austritt.

2. Luftleitvorrichtung nach Anspruch 1,
**dadurch gekennzeichnet, dass**
- die Querschnittsform des Strahlrohres (30) im Wesentlichen der Querschnittsform des Kanals (24) entspricht.

3. Luftleitvorrichtung nach Anspruch 1 oder 2,
**dadurch gekennzeichnet, dass** eine Steuereinrichtung (32) vorhanden ist, die auf einen Verschiebemechanismus zum Verschieben des Strahlrohres (30) einwirkt.

4. Luftleitvorrichtung nach Anspruch 3,
**dadurch gekennzeichnet, dass**
- die Steuereinrichtung manuell betätigbar ist.

5. Luftleitvorrichtung nach Anspruch 3,
**dadurch gekennzeichnet, dass**
- die Steuereinrichtung in Abhängigkeit der zugeführten Luftmenge die Verschiebung des Strahlrohres steuert, derart, dass je mehr Luft zugeführt wird desto weiter wird das Strahlrohr im Richtung der Luftleiteinrichtung ausgefahren.

6. Luftleitvorrichtung nach Anspruch 5,
**dadurch gekennzeichnet, dass**
- die Steuereinrichtung in Abhängigkeit der Winkelstellung einer im Kanal (24) drehbar angeordneten Klappe (34) die Verschiebung des Strahlrohres steuert.

7. Luftleitvorrichtung nach einem oder mehreren der Ansprüche 3, 5 oder 6,
**dadurch gekennzeichnet, dass**
- die Steuereinrichtung lediglich bei maximal zugeführter Luftmenge beziehungsweise voll geöffneter Klappe (34) ein vollständiges Ausfahren des Strahlrohres (30) veranlasst.

8. Luftleitvorrichtung nach einem oder mehreren der vorstehenden Ansprüche,
**dadurch gekennzeichnet, dass**
- die Luftleiteinrichtung (12) einen Luftleitkörper (50) aus elastisch verformbarem Material mit durchgehenden Ausnehmungen (52) aufweist,
- Mittel zum Verschieben der Rückseite des Luftleitkörpers (50) gegenüber der fixierten Vorderseite des Luftleitkörpers (50) vorhanden sind oder umgekehrt und
- die Mittel zum Verschieben von Mitteln zum Einstellen der Richtung beaufschlagt werden, so dass sich eine gewünschte Stellung der durchgehenden Ausnehmungen (52) und damit die gewünschte Einströmrichtung (R) einstellbar ist.

9. Luftleitvorrichtung nach Anspruch 8,
**dadurch gekennzeichnet, dass** Luftleitkörper (50) innenseitig eine Verschiebeplatte (54) mit entsprechenden Ausnehmungen (56) aufweist, wobei die Mittel zum Verschieben auf die Verschiebeplatte (54) einwirken.

10. Luftleitvorrichtung nach Anspruch 8 oder 9,
**dadurch gekennzeichnet, dass**
- die durchgehenden Ausnehmungen (52) zumindest bereichsweise parallel zueinander angeordnet sind.

11. Luftleitvorrichtung nach einem oder mehreren der Ansprüche 8 bis 10,
**dadurch gekennzeichnet, dass**
- die durchgehenden Ausnehmungen (52) zumindest bereichsweise in einem definierten Winkel (W1 bis W4) zueinander angeordnet sind.

12. Luftleitvorrichtung nach einem oder mehreren der Ansprüche 8 bis 11,
**dadurch gekennzeichnet, dass**
- die durchgehenden Ausnehmungen einen runden, polygonalen oder ovalen Querschnitt aufweisen.

13. Luftleitvorrichtung nach einem oder mehreren der Ansprüche,
**dadurch gekennzeichnet, dass**
- die Vorderseite der Luftleiteinrichtung (12) beziehungsweise des Luftleitkörpers (50) dreidimensional ausgebildet ist, insbesondere eine sphärisch konvexe Wölbung aufweist.

14. Luftleitvorrichtung nach einem oder mehreren der vorstehenden Ansprüche,
**dadurch gekennzeichnet, dass**
- vorderseitig auf der Luftleiteinrichtung (12) beziehungsweise dem Luftleitkörper (50) eine Lochblende (16) angeordnet ist.

15. Luftleitvorrichtung nach Anspruch 14,
**dadurch gekennzeichnet, dass**
- die Lochblende aus hochwertigem Designmaterial besteht, insbesondere aus Aluminium, Edelstahl, Holz furniert, Leder bezogen oder Kevlar®.

16. Luftleitvorrichtung nach einem oder mehreren der vorstehenden Ansprüche,
**dadurch gekennzeichnet, dass** die durchgehenden Ausnehmungen untereinander unterschiedliche Querschnittsflächen aufweisen.

## Claims

1. An air-guiding appliance (10) for the directionally defined introduction (R) of air (L) supplied on the rear side (20) of the appliance into a space (22), in particular interior of a vehicle, having
- a housing (26),
- at least one duct (24) in which the air (L) is supplied to the housing (26),
- an air-guiding device (12) which has recesses (14) on the front side and by means of which the direction (R) of the air flowing out into the space (22) can be defined,
- means for setting the direction (R) of the air-guiding device (12) and, if appropriate,
- means for setting the quantity of the air flowing into the space (22),
**characterized in that**
- a jet pipe (30) which can be displaced in and counter to the direction of the supplied air (L) is arranged in the housing (26) or in the duct (24) and its air outlet opening (28) is smaller in size than the cross-sectional surface of the air-guiding device (12),
- in which case, in the retracted position of the jet pipe (30), the air (L) emerges from the air-guiding device (12) with a diffused outflow profile (40) and, in the extended position of the jet pipe (30), the air outlet opening (32) of said jet pipe is brought so close to the inside of the air-guiding device (12) that the air emerges with a focused outflow profile (42).

2. The air-guiding appliance as claimed in claim 1,
**characterized in that**
- the cross-sectional shape of the jet pipe (30) corresponds essentially to the cross-sectional shape of the duct (24).

3. The air-guiding appliance as claimed in claim 1 or 2,
**characterized in that**
there is a control device (32) which acts on a displacement mechanism for displacing the jet pipe (30).

4. The air-guiding appliance as claimed in claim 3,
**characterized in that**
- the control device can be actuated manually.

5. The air-guiding appliance as claimed in claim 3,
**characterized in that**
- the control device controls the displacement of the jet pipe as a function of the supplied quantity of air in such a manner that the greater the quantity of air supplied, the further is the jet pipe extended in the direction of the air-guiding device.

6. The air-guiding appliance as claimed in claim 5,
**characterized in that**
- the control device controls the displacement of the jet pipe as a function of the angular position of a flap (34) arranged rotatably in the duct (24).

7. The air-guiding appliance as claimed in one or more of claims 3, 5 or 6,
**characterized in that**
- the control device brings about a complete extension of the jet pipe (30) only when the air supplied is at maximum quantity or the flap (34) is completely open.

8. The air-guiding appliance as claimed in one or more of the preceding claims,
**characterized in that**
- the air-guiding device (12) has an air-guiding body (50) made of elastically deformable material with through-going recesses (52),
- means for displacing the rear side of the air-guiding body (50) with respect to the fixed front side of the air-guiding body (50) are provided, or vice versa, and
- the displacement means are acted upon by means for setting the direction, so that a desired position of the through-going recesses (52) and therefore the desired inflow direction (R) can be set.

9. The air-guiding appliance as claimed in claim 8,
**characterized in that**
air-guiding body (50) has, on the inside, a displacement plate (54) with corresponding recesses (56), the displacement means acting on the displacement plate (54).

10. The air-guiding appliance as claimed in claim 8 or 9,
**characterized in that**
- the through-going recesses (52) are arranged parallel to one another at least in some regions.

11. The air-guiding appliance as claimed in one or more of claims 8 to 10,
**characterized in that**
- the through-going recesses (52) are arranged at a defined angle (W1 to W4) with respect to one another at least in some regions.

12. The air-guiding appliance as claimed in one or more of claims 8 to 11,
**characterized in that**
- the through-going recesses have a round, polygonal or oval cross section.

13. The air-guiding appliance as claimed in one or more of the preceding claims,
**characterized in that**
- the front side of the air-guiding device (12) or of the air-guiding body (50) is of three-dimensional design, in particular has a spherically convex curvature.

14. The air-guiding appliance as claimed in one or more of the preceding claims,
**characterized in that**
- a perforated screen (16) is arranged on the front side of the air-guiding device (12) or of the air-guiding body (50).

15. The air-guiding appliance as claimed in claim 14,
**characterized in that**
- the perforated screen consists of high-quality design material, in particular of aluminum, stainless steel or is wood veneered, leather-covered or of kevlar® .

16. The air-guiding appliance as claimed in one or more of the preceding claims,
**characterized in that**
the through-going recesses have different cross-sectional areas from one another.

## Revendications

1. Dispositif d'acheminement d'air (10) pour l'introduction directionnellement définie (R) d'air amené (L) à l'arrière (20) du dispositif dans un espace (22), en particulier dans l'habitacle d'un véhicule, comprenant
- un boîtier (26),
- au moins un conduit (24) dans lequel l'air (L) est amené au boîtier (26),
- un dispositif de guidage d'air (12) présentant sur le devant des évidements (14) au moyen desquels on peut définir la direction (R) de l'air s'écoulant dans l'espace (22),
- des moyens pour régler la direction (R) du dispositif de guidage d'air (12) et le cas échéant
- des moyens pour régler la quantité de l'air s'écoulant dans l'espace (22),
**caractérisé par le fait**
- **qu'**un tube à jet (30) déplaçable dans le sens et dans le sens inverse de l'air amené (L) est disposé dans le boîtier (26) ou le conduit (24), dont l'ouverture de sortie d'air (28) présente une grandeur plus faible que la surface de la section du dispositif de guidage d'air (12),
- **qu'**en position rentrée du tube à jet (30) l'air (L) sort du dispositif de guidage d'air (12) avec un profil d'écoulement diffus (40) et en position sortie du tube à jet (30) son ouverture de sortie d'air (28) est amenée si près du côté intérieur du dispositif de guidage d'air (12) que l'air sort avec un profil d'écoulement concentré (42).

2. Dispositif d'acheminement d'air selon la revendication 1,
**caractérisé par le fait**
- **que** la forme de la section du tube à jet (30) correspond pour l'essentiel à la forme de la section du conduit (24).

3. Dispositif d'acheminement d'air selon la revendication 1 ou 2,
**caractérisé par le fait**
- **qu'**il est prévu un dispositif de commande (32) qui agit sur un mécanisme de déplacement pour déplacer le tube à jet (30).

4. Dispositif d'acheminement d'air selon la revendication 3,
**caractérisé par le fait**
- **que** le dispositif de commande peut être actionné manuellement.

5. Dispositif d'acheminement d'air selon la revendication 3,
**caractérisé par le fait**
- **que** le dispositif de commande commande le déplacement du tube à jet en fonction de la quantité d'air amenée de telle manière que plus on amène d'air, plus le tube à jet est sorti en direction du dispositif de guidage d'air.

6. Dispositif d'acheminement d'air selon la revendication 5,
**caractérisé par le fait**
- **que** le dispositif de commande commande le déplacement du tube à jet en fonction de la position angulaire d'un volet (34) disposé de manière pivotante dans le conduit (24).

7. Dispositif d'acheminement d'air selon l'une ou plusieurs des revendications 3, 5 ou 6,
**caractérisé par le fait**
- **que** le dispositif de commande commande une sortie complète du tube à jet (30) seulement quand la quantité d'air amenée est maximale, c'est-à-dire quand le volet (34) est complètement ouvert.

8. Dispositif d'acheminement d'air selon l'une ou plusieurs des revendications précédentes,
**caractérisé par le fait**
- **que** le dispositif de guidage d'air (12) présente un corps de guidage d'air (50) en matériau déformable élastiquement avec des évidements traversants (52),
- **qu'**il est prévu des moyens pour déplacer la face arrière du corps de guidage d'air (50) par rapport à la face avant fixe du corps de guidage d'air (50) ou inversement et
- **que** les moyens de déplacement sont soumis à des moyens de réglage de la direction, de sorte que l'on peut régler une position souhaitée des évidements traversants (52) et par conséquent la direction d'écoulement (R) souhaitée.

9. Dispositif d'acheminement d'air selon la revendication 8,
**caractérisé par le fait**
- **que** le corps de guidage d'air (50) présente du côté intérieur une plaque coulissante (54) munie d'évidements correspondants (56), les moyens de déplacement agissant sur la plaque coulissante (54).

10. Dispositif d'acheminement d'air selon la revendication 8 ou 9,
**caractérisé par le fait**
- **que** les évidements traversants (52) sont, au moins en partie, parallèles les uns aux autres.

11. Dispositif d'acheminement d'air selon l'une ou plusieurs des revendications 8 à 10,
**caractérisé par le fait**
- **que** les évidements traversants (52) font, au moins en partie, un angle défini (W1 à W4) les uns avec les autres.

12. Dispositif d'acheminement d'air selon l'une ou plusieurs des revendications 8 à 11,
**caractérisé par le fait**
- **que** les évidements traversants présentent une section ronde, polygonale ou ovale.

13. Dispositif d'acheminement d'air selon l'une ou plusieurs des revendications précédentes,
**caractérisé par le fait**
- **que** la face avant du dispositif de guidage d'air (12) ou du corps de guidage d'air (50) a une forme tridimensionnelle, en particulier présente une courbure convexe sphérique.

14. Dispositif d'acheminement d'air selon l'une ou plusieurs des revendications précédentes,
**caractérisé par le fait**
- **qu'**une grille perforée (16) est disposée sur la face avant du dispositif de guidage d'air (12) ou du corps de guidage d'air (50).

15. Dispositif d'acheminement d'air selon la revendication 14,
**caractérisé par le fait**
- **que** la grille perforée est en matériau décoratif de qualité, en particulier en aluminium, en acier inoxydable, en bois plaqué, revêtue de cuir ou en kevlar® .

16. Dispositif d'acheminement d'air selon l'une ou plusieurs des revendications précédentes,
**caractérisé par le fait**
- **que** les évidements traversants présentent des surfaces de section différentes les unes des autres.
